# EUROPEAN PATENT SPECIFICATION

(11) **EP 2 876 755 B1**
(45) Date of publication and mention of the grant of the patent: **15.06.2016**
(21) Application number: 13460077.4
(22) Date of filing: 22.11.2013
(51) Int. Cl.: H02B 7/06, E21B 33/035, H02H 3/04, H02H 3/06

(54) **Electrical distribution unit for subsea applications**
Stromverteilungseinheit für Unterwasseranwendungen
Unité de distribution électrique pour des applications sous-marines

(43) Date of publication of application: 27.05.2015
(73) Proprietor: ABB Technology AG, 8050 Zürich (CH)
(72) Inventor: Lazarczyk, Michal, 30-384 Krakow (PL); Stosur, Mariusz, 58-130 Imbramowice (PL)
(74) Representative: Chochorowska-Winiarska, Krystyna

(56) References cited:
- WO-A1-2008/004084
- WO-A1-2008/004086
- WO-A1-2012/038237
- US-A- 2 288 953

## Description

The present invention relates to an electrical distribution unit (EDU) for subsea applications used in subsea distribution systems (SDS) and is intended for providing protection against short circuits in transformers, capacitor banks, cable lines, pump motors and other electrical and power equipment designed to work underwater in high pressure and high salinity conditions. The unit is capable of breaking short-circuit currents multiple times and able to restore the power supply after the transient fault is cleared, or to form a safety isolation in case of a permanent fault.

The operational experience of power networks and systems indicates that most high-current fault conditions are transient. In the case of power supply systems operating in the subsea environment, which often has limited access, it is very important to ensure the reliability of electrical equipment operating in such environment by providing protection against short circuits and reclose once a fault is cleared. To provide protection against fault currents in SDS systems, fuses or circuit breakers are used, which are mounted inside the oil-filled, pressure-balanced, graphite coated steel housing, called an electrical distribution unit (EDU), which is described in the document "Guidelines for Isolation and Intervention: Diver Access to Subsea Systems" published by the International Marine Contractors Association, IMCA D 044, October 2009. An example of an EDU solution using high voltage circuit breaker for breaking short circuit currents is described in WO 2008/004084 A1. In this patent application a subsea switchgear apparatus comprises a frame, at least one electrical power inlet/outlet mounted to the frame; a distribution chamber and at least one canister also mounted on the frame; chamber with voltage circuit breaker; electrical connections arranged in the distribution chamber for electrically connecting the respective circuit breaker of the canister to the associated power inlet/outlet. The chamber of the respective canister is separated from the distribution chamber by a pressure barrier.

A disadvantage of using circuit breakers in EDUs is that the circuit breaker reset mechanism must penetrate through the EDU housing. The penetrator must be sealed using O-rings, what introduces a potential fault path. A disadvantage of using circuit breakers is that they are also more expensive. A disadvantage of using fuses in EDUs is that they must always be replaced once they are blown. In the subsea applications fuse must be mounted outside of the unit housing and can be replaced once they are blown by a qualified diver or remotely operated vehicle (ROV). If the fuses are replaced by the diver, diver safety will be compromised as it is not possible to locally test the isolation-prior-to-disconnection properties of the fuse release mechanism. If using a remotely operated vehicle, the unit must be equipped with a ROV docking station. Replacing fuses also imposes a risk of degradation of power contacts in the fuse base. Although protected by an automatic shutter mechanism, the socket vacated by the removed fuse should immediately be occupied by a dummy-fuse to prevent degradation of the contacts due to the influence of environment and to ensure that any exposed electrical contacts are suitably insulated.

The essence of the invention is that the electrical distribution unit, which is intended for use in subsea distribution systems (SDS), is enclosed in a sealed, grounded housing filled with oil and comprising at least one input penetrator and at least one output penetrator, and said electrical distribution unit comprises:
- an active part housed in an enclosure having one input connector and one output connector for each a, b, c phase; a load-switch and a fuse bank connected in series, arranged between the input connector and the output connector of the active part; the load-switch includes a movable contact, and the fuse bank includes a fuse block, while the said block comprises at least two fuses and a multi-pole selector switch, which is provided with a movable contact,
- a control unit equipped with a signal connector for connection to the movable contact of the load-switch; a signal connector for connection to the movable contact of the multi-pole selector switch and a trip indication signal connector for connection to the fuse block of the active part.

Preferably, the electrical distribution unit is equipped with a voltmeter equipped with measuring terminals and a voltmeter signal connector, where first of said measuring terminals is electrically connected to the input connector of the fuse bank, and the second measuring terminal is electrically connected to the output connector of the fuse bank, and the voltmeter signal connector is connected to the trip indication signal connector of the control unit.

Preferably, the voltmeter is placed on the outside of the active part in a sealed enclosure.

Alternatively, the electrical distribution unit is equipped with a blown fuse indicator, which is a component of every fuse. The said indicator is signal coupled to the trip indication signal connector of the control unit.

Preferably, the control unit is connected to a single-phase transformer used as a power supply of the control unit.

Preferably, the control unit is connected to a single-phase transformer through a backup power supply arranged between the control unit and the transformer.

Preferably, the electrical distribution unit is equipped with a wired communication module arranged inside the control unit.

Preferably, the electrical distribution unit is equipped with a wireless communication module arranged inside the control unit.

Preferably, the fuse bank is a single-phase assembly.

Alternatively, the fuse bank is a multi-phase assembly.

An advantage of the electrical distribution unit for subsea applications obtained in the present invention is a capability of automatic breaking of fault currents multiple times and restoring the power supply after the transient fault condition is cleared or forming a safety isolation in case of a permanent fault. Another advantage is that due to the used component parts it is not necessary, as in case of state of the art circuit breakers, to penetrate any reset mechanisms through the EDU housing, which eliminates known risk of introducing potential fault paths. The invention also advantageously provides the ability to automatically replace the fuses once they are blown, which eliminates the need to replace them by a qualified diver or ROV and thus eliminates the risk of damaging the contacts of fuse bases and compromising diver safety.

The invention is explained in more detail on the basis of the exemplary embodiments in the drawings, in which:

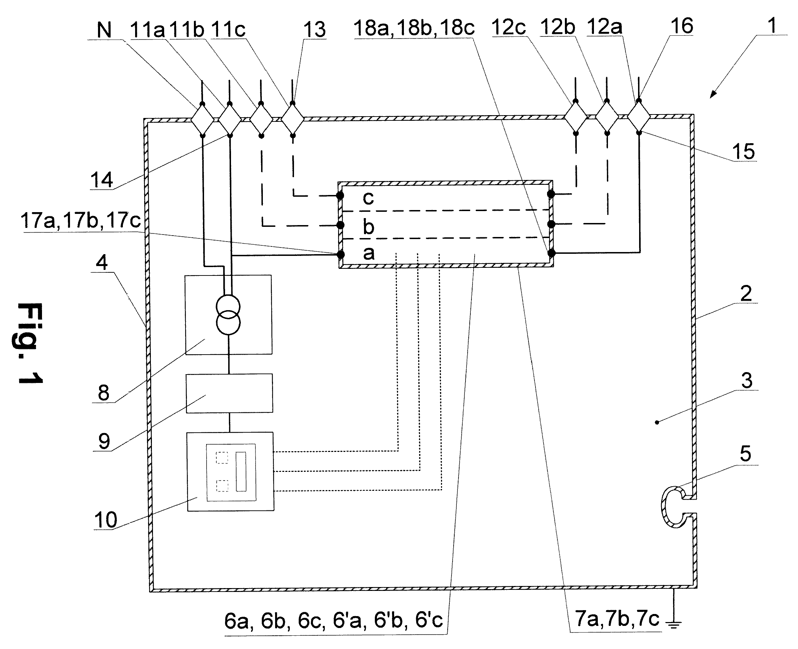

Figure 1 - is a simplified block diagram of the three-phase electrical distribution unit,
Figure 2 - shows a detail of the distribution unit from Figure 1 in a single-phase system, in the first embodiment of the invention,

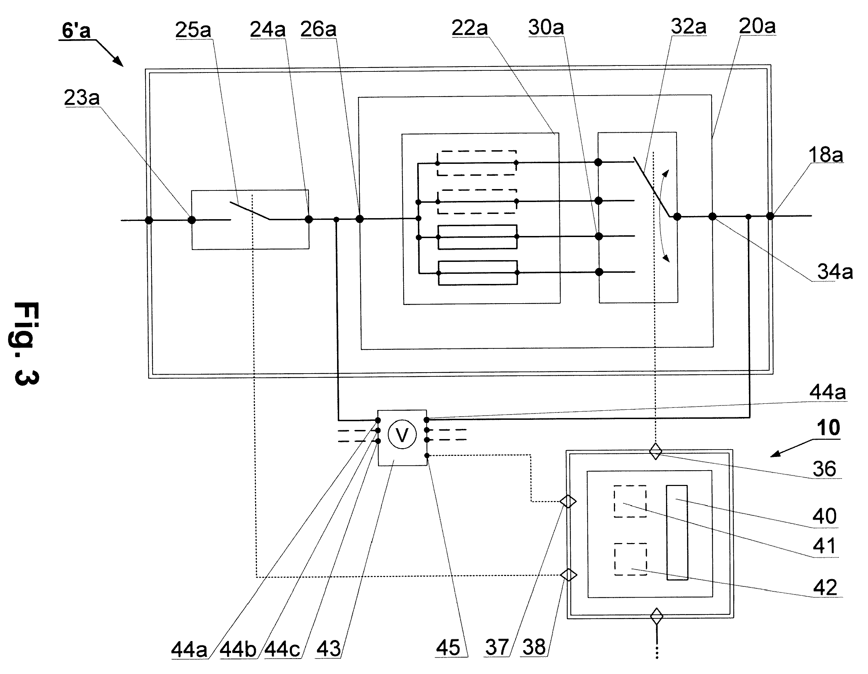

Figure 3 - shows a detail of the distribution unit from Figure 1 in a single-phase system, in the second embodiment of the invention.

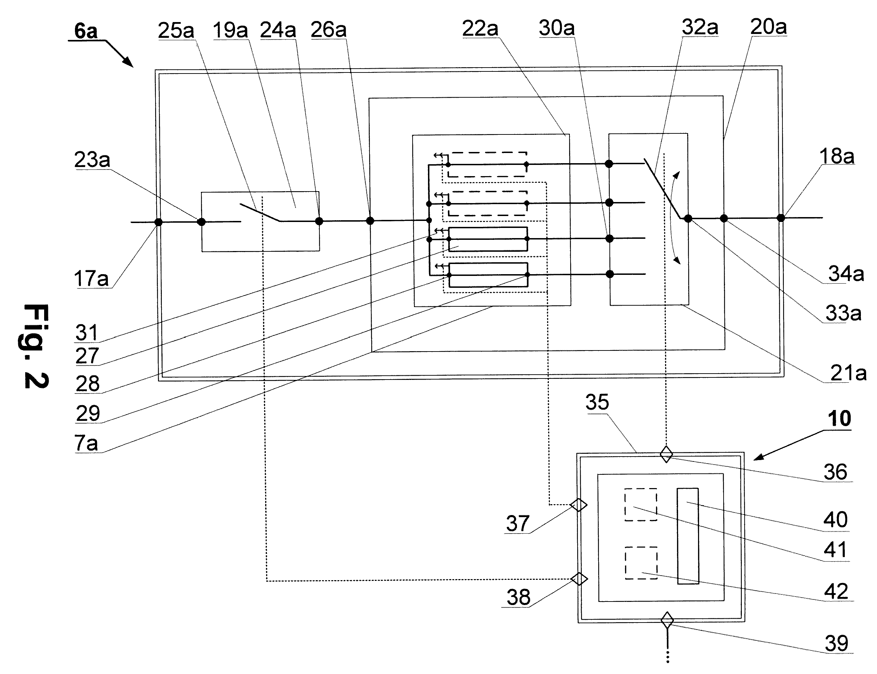

An electrical distribution unit 1 for subsea applications, in a single- or multi-phase system, comprises a sealed housing 2 that is grounded and filled with oil 3. In one of the walls 4 of the housing 2 there is a membrane 5 for pressure compensation. Inside the housing 2 there is arranged at least one active part 6a, 6b, 6c housed in an enclosure 7a, 7b, 7c, respectively, a single-phase power transformer 8, a single-phase backup electric power supply 9 and a control unit 10. In the case of a single-phase system, only one active part 6a is arranged in the enclosure 7a. In the case of a multi-phase system, as illustrated in the drawing, which shows a three-phase system, and indicated by a dotted line, the active parts 6a, 6b, 6c may be arranged in a common enclosure 7 or in separate enclosures 7a, 7b and 7c. In the wall 4 of the housing 2 are mounted input penetrators 11a, 11b, 11c of a, b, c phases, output penetrators 12a, 12b, 12c of a, b, c phases and a penetrator of neutral conductor N. Each input penetrator 11a, 11b, 11c is equipped with an electrical input terminal 13 and an electrical output terminal 14. Each output penetrator 12a, 12b, 12c is equipped with an electrical input terminal 15 and an electrical output terminal 16. Penetrator terminals 13, 14, 15, 16 are of disconnectable type. The input terminal 13 of the input penetrator 11a, 11b, 11c, and the output terminal 16 of the output penetrator 12a, 12b, 12c are positioned on the outside of the housing 2. The input terminal 13 is adapted to provide a connection between the electrical distribution unit 1 and a power supply system, not indicated in the drawing. The output terminal 16 is adapted to provide an output of power to the receivers which are not indicated in the drawing. The output terminal 14 of the input penetrator 11a, 11b, 11c and the input terminal 15 of the output penetrator 12a, 12b, 12c are arranged inside the housing 2 of the electrical distribution unit 1. The single-phase power transformer 8 is electrically connected to one of the input penetrators 11a, 11b, 11c, the terminal of the penetrator of neutral conductor N and to the single-phase backup power supply 9, which in turn is connected to the control unit 10. The active part 6a, 6b, 6c of the electrical distribution unit 1, is shown schematically in the drawing in Figure 2 and is presented as a single-phase embodiment 6a for simplicity. Electrical connections and design of the component parts are identical for the remaining phases of multi-phase systems. The active part 6a includes an input connector 17a, an output connector 18a, and connected in series between them a load-switch 19a and a fuse bank 20a. The fuse bank 20a includes a multi-pole selector switch 21a and a fuse block 22a, connected in series. The load-switch 19a includes an input connector 23a, an output connector 24a, and a contact set 25a, which is arranged between the connectors 23a and 24a. The input connector 23a is electrically connected to the input connector 17a of the active part 6a. The output connector 24a is electrically connected to the input connector 26a of the fuse block 22a. In case of a multi-phase system and a multiphase electrical distribution unit 1, the contact set 25a of the first phase is mechanically interlocked with the contact sets 25b, 25c, etc. of subsequent phases. The fuse block 22a includes one input connector 26a, at least two fuses 27, each having an input contact 28 and an output contact 29. The output contact 29 is connected to the input contact 30a of the multi-pole switch 21a. Fuses 27 are arranged in fuse holders, which are not indicated in the drawing. The multi-pole selector switch 21a includes input contacts 30a, a movable contact 32a, and an output contact 33a. The output contact 33a is connected to the output connector 34a of the fuse bank 20a. Each input contact 28 of individual fuse 27 is electrically connected to the input connector 26a of the fuse bank 20a. Each output contact 29 of individual fuse 27 is connected to only one input terminal 30a of the multi-pole selector switch 21a, which comprises number of contacts 30a equal to the quantity of fuses 27 in a given fuse bank 20. Number of positions of the movable contact 32a of the multi-pole selector switch 21a is equal to the number of input contacts 30a of the multi-pole selector switch 21a. In case of a multi-phase system and a multiphase electrical distribution unit 1, the movable contact 32a of the multi-pole selector switch 21a of the first phase is mechanically interlocked with the movable contacts 32b, 32c, etc. of subsequent phases.

The actuator mechanism of the movable contact 32a the multi-pole selector switch 21a is signal coupled to a control unit 10, which is indicated in Figure 2 with the dotted line. The output contact 33a of the switch 21a is electrically connected to the output connector 34a of the fuse bank 20a, and the said connector is electrically connected to the output connector 18a of the active part 6a and is connected to the output penetrator 12a of the distribution unit 1 through the input terminal 15. The power supply transformer 8 includes a primary and secondary circuit, and is housed in an enclosure, which is not indicated in the drawing. The primary circuit of the power supply transformer 8 is electrically connected to one of the input penetrators 11 and the penetrator of neutral connector N of the electrical distribution unit 1. The transformer secondary circuit is electrically connected to the backup power supply 9. The backup power supply 9 is housed in an enclosure, not indicated in the drawing, and is arranged between the transformer 8 and the control unit 10. The control unit 10 is housed in a sealed, shielded enclosure 35. A power supply connector 39 is attached in the walls of the enclosure 35. The control unit 10 is powered via the connector 39 by the power supply 9. The control unit 10 includes a main control module 40. Optionally, the control unit 10 may be provided with a wire communication module 41 or the wireless communication module 42 for connection to a master, external system control system, not indicated in the drawing. The wire communication module 41 and wireless communication module 42 are shown in dotted lines in the drawing.

In a first embodiment of the invention, each fuse 27 is equipped with a blown fuse indicator 31, which is signal coupled with a contact set 25a of the load-switch 19a via the control unit 10. In this embodiment, the control unit 10 is signal coupled with the blown fuse indicators 31 of the fuses 27 via a trip indication signal connector 37 located in the wall of the enclosure 35 of the control unit 10. The control unit 10 is signal coupled with a contact set 25a of the load-switch 19a via the signal connector for controlling contact set of the load-switch 38.

In a second embodiment of the invention, the electrical distribution unit 1 is equipped with a voltmeter 43. The voltmeter is located on the outside of the active part 6'a, 6'b, 6'c in a sealed enclosure, not indicated in the drawing. The voltmeter 43 is equipped with pairs of measuring terminals 44a, 44b, 44c, one pair for each a, b, c phase. In each pair one of the terminals is connected to the input connector 26a of the fuse bank 20a and the other is connected to the output connector 34a of the fuse bank 20a. In the multi-phase embodiments subsequent pairs of terminals are connected by analogy with input and output connectors of the fuse assemblies. The voltmeter is equipped with a signal connector 45, which is signal coupled with the trip indication signal connector 37 of the control unit 10, located in the wall of the enclosure 35 of the control unit 10.

In the operating conditions, the electrical distribution unit 1 according to the invention, suitable for use in a subsea environment and designed to power electrical equipment operated in this environment carries load currents, and during fault cases - when short-circuit occurs - is capable of breaking fault currents multiple times and able to restore the power supply when the transient short-circuit condition is cleared or to form a safety isolation in case of a permanent fault. During faults, i.e. in situations when an overload or short-circuit current flows through the electrical distribution unit 1, the electrical distribution unit 1 operates in such a way that the flow of overload or short-circuit current results in tripping the fuse 27, which carried the work current before the occurrence of an emergency situation, and thus results in disconnecting the loads from the power supply system.

In the first embodiment of the invention upon tripping the fuse 27 the blown fuse indicator 31 of the fuse 27, which is signal coupled to the control unit 10 moves rapidly to the extended position, and a safety isolation is formed between the power supply system and loads connected to the electrical distribution unit 1. The movement of the blown fuse indicator 31 of the fuse 27 generates a signal, which is transmitted to the control unit 10 through the trip indication signal connector 37 of the control unit 10. Upon receiving a signal confirming tripping the fuse 27, the control unit 10 sends through the signal connector for controlling contact set of the load-switch 38 a control signal to open the contact set 25a, 25b, 25c of the load-switch 19a, 19b, 19c. Opening of the contact sets 25a, 25b, 25c of the load-switch 19a, 19b, 19c results in switching the electrical distribution unit 1 into the open state. Then, the control unit 10 sends a control signal through signal connector for controlling the multi-pole switch 36 to change the position of the movable contact 32a, 32b, 32c of the multi-pole switch 21a, 21b, 21c and therefore select another fuse 27 of the fuse block 22a, and further sends the control signal that causes closing of the contact set 25a, 25b, 25c of the load-switch 19a, 19b, 19c. Changing the position of the movable contact 32a, 32b, 32c of the multi-pole selector switch 21a, 21b, 21c and closing the sets of contacts 25a, 25b, 25c of the load-switch 19a, 19b, 19c results in switching the electrical distribution unit 1 into the closed state and the restoration of the supply of power to the loads powered by the electric unit distribution 1.

In the second embodiment of the invention, the voltmeter 43 detects the difference of potential between the input connector 26a and output connector 34a as a result of formed safe break. Upon detecting a potential difference, the voltmeter sends a signal to the control unit 10 via the trip indication signal connector 37. Further operation of the distribution unit 1 upon receiving a signal confirming tripping the fuse 27 is implemented as in the first embodiment of the invention.

In both embodiments of the invention, upon restoration of the power supply to loads when the transient short-circuit condition in the power supply system is cleared, the electrical distribution unit 1 conducts the load currents. If upon restoration of the power supply to loads a short-circuit or overload current will begin to flow again through the electrical distribution unit 1, then the operation of the electrical distribution unit is identical to the described above operation of the unit in an fault condition and is initiated by tripping the fuse 27. In case of occurrence of permanent fault in a system, the operating cycle of the electrical distribution unit 1 is carried out until all fuses 27 are blown. In an emergency, the electrical distribution unit 1 will break the short-circuit current and form a safe break at least twice, without outside interference. The number of trippings of the electrical distribution unit 1 in an emergency is equal to the number of un-blown fuses 27 in the fuse block 22a, 22b, 22c available at the time of occurrence of a permanent fault.

In a possible embodiment of the invention upon occurrence of the permanent fault, the operating cycle of the electrical distribution unit 1 is carried out not until all fuses are blown, but only a certain number of times after which the electrical distribution unit remains in the open state.. After the permanent fault is cleared, the system operation can be restored by sending a re-close request via the wired communication module 41 or wireless communication module 42 of the control unit 10. In case of a permanent fault or tripping all fuses 27 of the fuse block 22a, 22b, 22c, the electrical distribution unit 1 remains in the open state to ensure there is a safe break, preventing the system against switching on in the short-circuit conditions. Information about the number of un-blown fuses, blowing a fuse and switching to the next one and tripping of all the fuses in the block can be transmitted to a master control unit of the distribution unit 1 via the wired communication module 41 or wireless communication module 42 of the control unit 10.

List of reference numerals in the drawing:
1 - single or three-phase electrical distribution unit for subsea applications
2 - housing of the electrical distribution unit
3 - oil
4 - housing walls
5 - a membrane
6, 6' (a, b, c) - active part of the electrical distribution unit
7 (a, b, c) - enclosure of the active part
8 - single-phase power supply transformer
9 - single-phase backup power supply
10 - control unit
11 (a, b, c) - input penetrator of an electrical distribution unit
N - penetrator of a neutral conductor
12 (a, b, c) - output penetrator of an electrical distribution unit
13 (a, b, c) - input terminal of the input penetrator
14 (a, b, c) - output terminal of the input penetrator
15 (a, b, c) - input terminal of the output penetrator
16 (a, b, c) - output terminal of the output penetrator
17 (a, b, c) - input connector of the active part
18 (a, b, c) - output connector of the active part
19 (a, b, c) - load-switch
20 (a, b, c) - fuse bank
21 (a, b, c) - multi-pole selector switch
22 (a, b, c) - fuse block
23 (a, b, c) - input connector of the load-switch
24 (a, b, c) - output connector of the load-switch
25 (a, b, c) - contact set of the load switch
26 (a, b, c) - input connector of the fuse bank
27 - fuse
28 - fuse input contact
29 - fuse output contact
30a - input of the multi-pole selector switch
31 - blown fuse indicator
32a - movable contact of the multi-pole selector switch
33a - output of the multi-pole selector switch
34a - output connector of the fuse bank
35 - enclosure of the control unit
36 - signal connector for controlling the multi-pole selector switch
37 - trip indication signal connector
38 - signal connector for controlling contact set of the load-switch
39 - power supply connector
40 - main control module of the control unit
41 - wired communication module of the control unit
42 - wireless communication module of the control unit
43 - voltmeter
44 (a, b, c) - pairs of voltmeter measurement terminals
45 - signal connector of the voltmeter

## Claims

1. An electrical distribution unit (1), intended for subsea applications, enclosed in a sealed, grounded housing (2) filled with oil (3) and equipped with at least one input penetrator (11a, 11b, 11c) and at least one output penetrator (12a, 12b, 12c), **characterized in that** it comprises:
• an active part (6a, 6b, 6c; 6'a, 6'b, 6'c) housed in an enclosure (7a, 7b, 7c) having one input connector (17a, 17b, 17c) and one output connector (18a, 18b, 18c) for each phase (a , b, c), respectively; a load-switch (19a, 19b, 19c) and a fuse bank (20a, 20b, 20c) connected in series between the input connector (17a, 17b, 17c) and the output connector (18a, 18b, 18c); the load-switch includes a movable contact (25a, 25b, 25c), and the fuse bank includes a fuse block (22a, 22b, 22c), while the said block comprises at least two fuses (27) and a multi-pole selector switch (21a, 21b, 21c), which is provided with a movable contact (32a, 32b, 32c),
• a control unit (10), equipped with a signal connector (38) for connection to the movable contact (25a, 25b, 25c) of the load-switch (19a, 19b, 19c), a signal connector (36) for connection to the movable contact (32a, 32b, 32c) of the multi-pole selector switch and a trip indication signal connector (37) for connection to the fuse block (22a, 22b, 22c) of the active part (6a, 6b, 6c; 6'a, 6'b, 6'c).

2. An electrical distribution unit (1) according to claim 1, **characterized in that** it comprises a voltmeter (43) equipped with measuring terminals (44a, 44b, 44c) and signal connector (45), where first of said measuring terminals is electrically connected to the input connector (26a, 26 b, 26c) of the fuse bank (20a, 20b, 20c), respectively, and the second measuring terminal is electrically connected to the output connector (34a, 34b, 34c) of the fuse bank (20a, 20b, 20c), respectively, and the signal connector (45) of the voltmeter (43) is connected to the trip indication signal connector (37) of the control unit (10).

3. An electrical distribution unit (1) according to claim 2, **characterized in that** the voltmeter (43) is positioned on the outside of the active part (6'a, 6'b, 6'c), respectively, in a sealed enclosure.

4. An electrical distribution unit (1) according to claim 1, **characterized in that** it is equipped with a blown fuse indicator (31), which is an element of each fuse (27) in the fuse block (22a, 22b, 22c), and the said indicator is signal coupled to the trip indication signal connector (37) of the control unit (10)).

5. An electrical distribution unit (1) according to claim 1, **characterized in that** the control unit (10) is connected with a single-phase transformer (8) used as a power supply of the control unit (10).

6. An electrical distribution unit (1) according to claim 5, **characterized in that** the control unit (10) is connected with a single-phase transformer (8) through a backup power supply (9) arranged between the control unit (10) and the transformer (8).

7. An electrical distribution unit (1) according to any one of the preceding claims, **characterized in that** it is equipped with a wired communication module (41) arranged inside the control unit (10).

8. An electrical distribution unit (1) according to any one of the preceding claims, **characterized in that** it is equipped with a wireless communication module (42) arranged inside the control unit (10).

9. An electrical distribution unit (1) according to any one of the preceding claims, **characterized in that** the fuse bank (20a) or (20b) or (20c) is a single-phase assembly.

10. An electrical distribution unit (1) according to any one of the preceding claims, **characterized in that** the fuse bank (20a, 20b, 20c) is a multi-phase assembly.

## Patentansprüche

1. Eine Stromverteilungs-Einheit (1) für Unterwasseranwendungen, eingekapselt in einem hermetisch abgeschlossenen, geerdeten Gehäuse (2), das mit Öl (3) gefüllt ist und mit mindestens einer Eingangs-Durchführung (Penetrator) (11a, 11b, 11c) und mindestens einer Ausgangs-Durchführung (Penetrator) (12a, 12b, 12c) ausgestattet ist, **dadurch gekennzeichnet, dass** es folgende Teile enthält:
• einen aktiven Teil (6a, 6b, 6c; 6'a, 6'b, 6'c), der in einem Gehäuse (7a, 7b, 7c) eingeschlossen ist und jeweils einen Eingangsanschluss (17a, 17b, 17c) und einen Ausgangsanschluss (18a, 18b, 18c) für jede Phase (a, b, c) besitzt, ferner einen Leistungstrennschalter (19a, 19b, 19c) und eine Sicherungsgruppe (20a, 20b, 20c), die in Serie zwischen dem Eingangsanschluss (17a, 17b, 17c) und dem Ausgangsanschluss (18a, 18b, 18c) geschaltet sind; der Leistungstrennschalter enthält einen beweglichen Kontakt (25a, 25b, 25c) und die Sicherungsgruppe enthält einen Sicherungsblock (22a, 22b, 22c), wobei der besagte Block mindestens zwei Sicherungen (27) und einen mehrpoligen Wählschalter (21a, 21b, 21c) enthält, der mit einem beweglichen Kontakt (32a, 32b, 32c) ausgestattet ist.
• eine Steuerungseinheit (10), die mit einem Signalanschluss (38) zur Verbindung mit dem beweglichen Kontakt (25a, 25b, 25c) des Leistungstrennschalters (19a, 19b, 19c), einem Signalanschluss (36) zur Verbindung mit dem beweglichen Kontakt (32a, 32b, 32c) des mehrpoligen Wählschalters und einem Anschluss zur Auslösemeldung (37) zur Verbindung mit dem Sicherungsblock (22a, 22b, 22c) des aktiven Teils (6a, 6b, 6c; 6'a, 6'b, 6'c) ausgestattet ist.

2. Eine Stromverteilungs-Einheit (1) gemäß Anspruch 1, **dadurch gekennzeichnet, dass** sie ein Voltmeter (43) enthält, das mit Messungsanschlüssen (44a, 44b, 44c) und einem Signalanschluss (45) ausgestattet ist, wobei jeweils der erste der besagten Messungsanschlüsse jeweils mit dem Eingangsanschluss (26a, 26 b, 26c) der Sicherungsgruppe (20a, 20b, 20c) elektrisch verbunden ist und der zweite Messungsanschluss jeweils mit dem Ausgangsanschluss (34a, 34b, 34c) der Sicherungsgruppe (20a, 20b, 20c) elektrisch verbunden ist und der Signalanschluss (45) des Voltmeters (43) mit dem Anschluss zur Auslösemeldung (37) der Steuerungseinheit (10) verbunden ist.

3. Eine Stromverteilungs-Einheit (1) gemäß Anspruch 2, **dadurch gekennzeichnet, dass** das Voltmeter (43) jeweils auf der Außenseite des aktiven Teils (6'a, 6'b, 6'c) in einem hermetisch abgeschlossenen Gehäuse untergebracht ist.

4. Eine Stromverteilungs-Einheit (1) gemäß Anspruch 1, **dadurch gekennzeichnet, dass** es mit einer Anzeige der Sicherungsauslösung (31) ausgestattet ist, die ein Element jeder Sicherung (27) im Sicherungsblock (22a, 22b, 22c) ist, und die besagte Anzeige ein Signal ist, das mit dem Anschluss zur Auslösemeldung (37) der Steuerungseinheit (10) gekoppelt ist.

5. Eine Stromverteilungs-Einheit (1) gemäß Anspruch 1, **dadurch gekennzeichnet, dass** die Steuerungseinheit (10) mit einem Ein-Phasen-Transformator (8) verbunden ist, der zur Leistungsversorgung der Steuerungseinheit (10) verwendet wird.

6. Eine Stromverteilungs-Einheit (1) gemäß Anspruch 5, **dadurch gekennzeichnet, dass** die Steuerungseinheit (10) mit dem Ein-Phasen-Transformator (8) durch eine Ersatz-Leistungsversorgung (9) verbunden ist, die zwischen der Steuerungseinheit (10) und dem Transformator (8) angeordnet ist.

7. Eine Stromverteilungs-Einheit (1) gemäß irgendeinem der vorhergehenden Ansprüche, **dadurch gekennzeichnet, dass** es mit einem leitungsgebundenen Kommunikations-Modul (41) ausgestattet ist, das innerhalb der Steuerungseinheit angeordnet ist.

8. Eine Stromverteilungs-Einheit (1) gemäß irgendeinem der vorhergehenden Ansprüche, **dadurch gekennzeichnet, dass** es mit einem drahtlosen Kommunikations-Modul (41) ausgestattet ist, das innerhalb der Steuerungseinheit angeordnet ist.

9. Eine Stromverteilungs-Einheit (1) gemäß irgendeinem der vorhergehenden Ansprüche, **dadurch gekennzeichnet, dass** die Sicherungsgruppe (20a) oder (20b) oder (20c) eine Ein-Phasen-Baugruppe ist.

10. Eine Stromverteilungs-Einheit (1) gemäß irgendeinem der vorhergehenden Ansprüche, **dadurch gekennzeichnet, dass** die Sicherungsgruppe (20a, 20b, 20c) eine Mehrphasen-Baugruppe ist.

## Revendications

1. Unité de distribution électrique (1) pour des applications sous-marines, enfermée dans un carter (2) étanche mis à terre qui est rempli d'huile (3) et équipé au moins d'une traversée d'entrée (11 a, 11 b, 11c) et au moins d'une traversée de sortie (12a, 12b, 12c), **caractérisée en ce qu**'elle comporte :
• une partie active (6a, 6b, 6c; 6'a, 6'b, 6'c) placée dans un boîtier (7a, 7b, 7c) possédant une borne d'entrée (17a, 17b, 17c) et une borne de sortie (18a, 18b, 18c) pour chaque phase (a, b, c) respectivement ; un disjoncteur (19a, 19b, 19c) et un jeu de fusibles (20a, 20b, 20c) connecté en série entre la borne d'entrée (17a, 17b, 17c) et la borne de sortie (18a, 18b, 18c) ; le disjoncteur possède un contact amovible (25a, 25b, 25c), le jeu de fusibles ayant deux fusibles au minimum (27) et un commutateur multipolaire (21 a, 21 b, 21 c) qui est muni d'un contact amovible (32a, 32b, 32c) ;
• une unité de commande (10) équipée d'un connecteur de signal (38) pour la communication avec le contact amovible (25a, 25b, 25c) du disjoncteur (19a, 19b, 19c), un connecteur de signal (36) pour la communication avec le contact amovible (32a, 32b, 32c) du commutateur multipolaire, et la borne de l'interrupteur du connecteur de signal (37) pour la communication avec le jeu de fusibles (22a, 22b, 22c) de la partie active (6a, 6b, 6c ; 6'a, 6'b, 6'c).

2. Unité de distribution électrique (1) selon la revendication 1, **caractérisée en ce qu**'elle comprend un voltmètre (43) équipé des bornes de mesure (44a, 44b, 44c) et un connecteur de signal (45), où la premières desdites bornes de mesure est connectée électriquement avec la borne d'entrée (26a, 26b, 26c) du jeu de fusibles respectivement, et l'autre borne de mesure est connectée électriquement avec la borne de sortie (34a, 34b, 34c) du jeu de fusibles (20a, 20b, 20c) respectivement, alors que le connecteur de signal (45) du voltmètre (43) est connecté à la borne d'enclenchement du connecteur de signal (37) de l'unité de commande (10).

3. Unité de distribution électrique (1) selon la revendication 2, **caractérisée en ce que** le voltmètre (43) est placé à l'extérieur du carter de la partie active (6'a, 6'b, 6'c) respectivement, dans une enveloppe étanche.

4. Unité de distribution électrique (1) selon la revendication 1, **caractérisée en ce qu**'elle est munie d'un indicateur d'enclenchement du fusible (31) qui est un composant de chaque fusible (27) dans le jeu de fusibles (22a, 22b, 22c) et que ledit indicateur est couplé par signal à la borne d'enclenchement du connecteur de signal (37) de l'unité de commande (10).

5. Unité de distribution électrique (1) selon la revendication 1, **caractérisée en ce que** l'unité de commande (10) est connectée au transformateur monophasé (8) qui est utilisé comme l'alimentation de l'unité de commande (10).

6. Unité de distribution électrique (1) selon la revendication 5, **caractérisée en ce que** l'unité de commande (10) est connectée au transformateur monophasé (8) par l'intermédiaire d'une source d'alimentation de secours (9) situé entre l'unité de commande (10) et le transformateur (8).

7. Unité de distribution électrique (1) selon une quelconque des revendications précédentes, **caractérisée en ce qu'**elle est équipée d'un module de communication à fil (41) placé à l'intérieur de l'unité de commande (10).

8. Unité de distribution électrique (1) selon une quelconque des revendications précédentes, **caractérisée en ce qu**'elle est équipée d'un module de communication sans fil (42) placé à l'intérieur de l'unité de commande (10).

9. Unité de distribution électrique (1) selon une quelconque des revendications précédentes, **caractérisée en ce que** le jeu de fusibles (20a) ou (20b) ou (20c) est assemblé de façon monophasée.

10. Unité de distribution électrique (1) selon une quelconque des revendications précédentes, **caractérisée en ce que** le jeu de fusibles (20a, 20b, 20c) est assemblé de façon polyphasée.
